# EUROPEAN PATENT SPECIFICATION

(11) **EP 2 788 565 B1**
(45) Date of publication and mention of the grant of the patent: **01.06.2016**
(21) Application number: 12812901.2
(22) Date of filing: 10.12.2012
(51) Int. Cl.: E04H 12/12, E04H 12/18, E04H 12/34

(54) **HORIZONTAL JOINT ASSEMBLY BETWEEN TWO TELESCOPIC WIND TURBINE TOWER PORTIONS AND METHOD OF INSTALLING SAME**
HORIZONTALE VERBINDUNGSANORDNUNG ZWISCHEN ZWEI TEILEN EINES TELESKOPISCHEN WINDTURBINENTURMS UND INSTALLATIONSVERFAHREN DAFÜR
ENSEMBLE JOINT HORIZONTAL SITUÉ ENTRE DEUX PARTIES DE TOUR D'ÉOLIENNE TÉLESCOPIQUE ET PROCÉDÉ D'INSTALLATION CORRESPONDANT

(30) Priority: 09.12.2011 ES 201131993 P
(43) Date of publication of application: 15.10.2014
(73) Proprietor: Sea Wind Towers, S.L., 28001 Madrid (ES); Esteyco S.A.P., 28036 Madrid (ES)
(72) Inventor: FERNÁNDEZ GÓMEZ, Miguel Ángel, 28036 Madrid (ES); JIMENO CHUECA, José Emilio, 28020 Madrid (ES)
(74) Representative: Linage González, Rafael
(86) International application number: PCT/EP2012/074997
(87) International publication number: WO 2013/083853

(56) References cited:
- WO-A1-02/46552
- WO-A1-2011/006526
- US-A- 4 932 176

## Description

### FIELD OF THE INVENTION

The present invention relates to a horizontal joint assembly between two telescopic wind turbine tower portions.

The primary field of application of the invention is the construction industry, particularly though not exclusively the concrete construction industry, within the renewable or green energy industry, specifically the wind energy industry.

### BACKGROUND OF THE INVENTION

Wind turbine towers are known to be built from at least two sections that are attached to one another and can be formed in turn by a plurality of curved profiles or segments which are attached side by side, creating vertical joints, until closing a section.

In this configuration, the segments of a wind turbine tower section are further attached to the segments of the section located immediately thereabove by means of horizontal joints.

If the towers are metallic, said joints can be formed by means of screws or other similar elements, or if they are made of concrete, they can comprise sealants that are applied in the circular ring-shaped space between the two facing edges of successive sections. Said sealants harden and integrally attach the corresponding successive sections to one another in a substantially hermetic manner.

In this latter case, due to the huge dimensions and weights of the profiles to be attached, said horizontal joints are often complemented with internally reinforced tongued and grooved fixing devices, i.e., fixing devices with a reinforcement arranged essentially within said sections and shared between two successive sections such that it is embedded in the concrete of one of said successive sections and housed in a conduit of the other one of said successive sections and anchored to the latter for fastening both sections to one another.

Tower sections can also adopt different shapes, such as a cylindrical, oval or polygonal shape, for example. Nevertheless and for the sake of simplicity, hereinafter the description will refer to wind turbine towers made up of tapered or frustoconical cylindrical sections, although it will be understood that the towers can also be made up of oval-shaped sections, polygonal-shaped sections or sections having any other suitable shape.

Telescopic towers formed from at least two coaxial sections having a different diameter, optionally formed by segments, have recently been proposed.

Nevertheless, the horizontal joints for attaching wind turbine tower sections currently known in the art and mentioned above contemplate supporting the upper section on the lower section, such that at least one of the faces of said upper section is comprised in the thickness of the lower section, which is incompatible with a telescopic type assembly.

Therefore there is a need for providing horizontal joint assemblies specific for telescopic type towers which further comply with the huge requirements imposed by the enormous dimensions and weights of the tower portions to be attached, as well as by the demanding dynamic loads in the wind turbine.

WO 2011/006526 A1 discloses a telescopic tower assembly and method, and WO 02/46552 A1 discloses a tilt-up and telescopic support tower for large structures.

### BRIEF DESCRIPTION OF THE INVENTION

A first object of the invention is, therefore, to provide a horizontal joint assembly specific for telescopic wind turbine towers.

More particularly, the invention relates to a horizontal joint assembly according to appended claim 1.

The convention of the "outer face" being the face that is oriented towards the outside of the tower and the "inner face" being face that is oriented towards the inside of the tower is adopted in the present specification. Likewise, "tower portion" is understood as a part of said tower that can consist of both a closed and complete tower section and one or several segments (if there are any).

A second object of the invention is to provide a method of installing a horizontal joint assembly as described above comprising the steps of:
a) Arranging an upper tower portion in the vicinity of the inner face of a lower tower portion, such that the outer face of the upper tower portion is facing the inner face of the lower tower portion;
b) Lifting said upper tower portion along the inner face of the lower tower portion until the thickening provided in the outer face of the base fraction of the upper tower portion substantially contacts the thickening provided in the inner face of the head fraction of the lower tower portion;
c) Anchoring said head fraction of the lower tower portion to said base fraction of the upper tower portion by means of anchoring means; and
d) Pouring a hardenable filler material on the contact surface between the base fraction of the upper tower portion and the head fraction of the lower tower portion.

### BRIEF DESCRIPTION OF THE DRAWINGS

These and other features and advantages of the invention will be better understood from the following description of an embodiment of the invention, given only by way of non-limiting example, with reference to the attached drawings in which:
Figure 1 is a perspective view of a telescopic wind turbine tower ;
Figure 2 is a cross-section view of a first embodiment of a horizontal joint assembly according to the invention;
Figure 3 is a cross-section view of a second embodiment of a horizontal joint assembly according to the invention;
Figure 4 is a cross-section view of a third embodiment of a horizontal joint assembly according to the invention;
Figure 5 is a cross-section view of a fourth embodiment of a horizontal joint assembly according to the invention;
Figure 6 is a view a fifth embodiment of a horizontal joint assembly according to the invention; and
Figure 7 is a cross-section view illustrating a step of the method of installing according to the invention.

### DETAILED DESCRIPTION OF THE INVENTION

Identical or similar parts are indicated with the same reference number in the drawing.

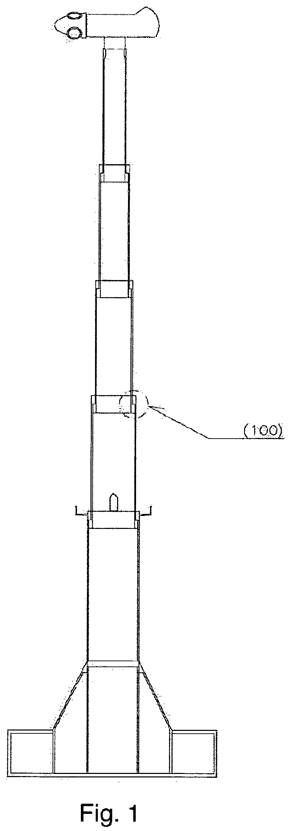

Figure 1 shows a telescopic wind turbine tower provided with horizontal joints 100.

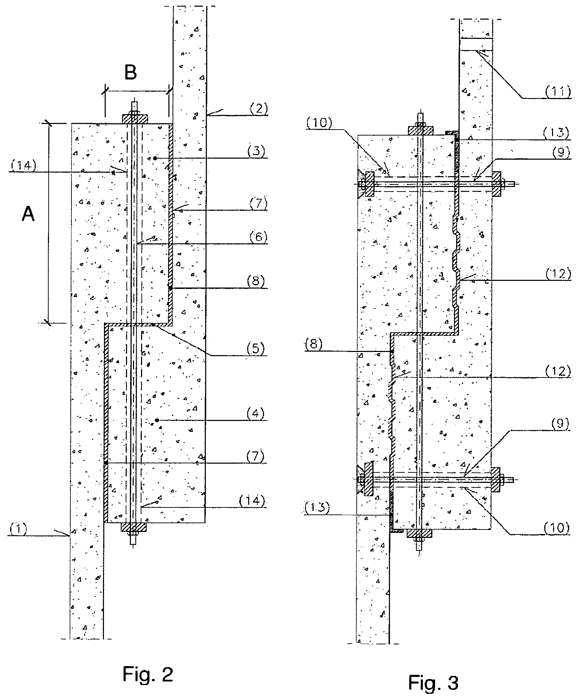

Figure 2 shows a first embodiment of a horizontal joint assembly according to the invention, comprising a lower tower portion 1 provided with a thickening 3 in the inner face of its head fraction and an upper tower portion 2 provided with a thickening 4 in the outer face of it head fraction, the relative position between said thickenings 3 and 4 being such that it defines a considerably horizontal contact surface 5 (of length B) and a considerably vertical contact surface 7 (of length A). Furthermore, both thickening 3 and thickening 4 are provided with a respective vertical through hole for receiving the anchoring means 6 which in this embodiment are a rod securing the lower tower portion 1 to the upper tower portion 2 according to the vertical direction. Respective immobilizing members which are respective threaded nuts and anchoring plates in this embodiment are applied on both sides of said rod 6.

In this embodiment, a sheath 14 is interposed between the vertical through hole of the thickenings 3, 4 and the anchoring rod 6. The length A of the considerably vertical contact surface 7 is also significantly greater than the length B of the horizontal contact surface 5.

A layer 8 of hardenable filler material which is grout in this embodiment is also arranged along the contact surfaces 5 and 7.

The horizontal joint assembly has three different mechanisms for transmitting stresses, namely: tensile stresses are transmitted through the rod 6, compressive stresses are transmitted by the direct contact of the considerably horizontal surface 5 and the upper part of the lower thickening 4, and finally longitudinal shear stresses are transmitted through the considerably vertical surface 7.

Figure 3 shows a second embodiment of a horizontal joint assembly similar to that described in Figure 2 except that both the sector of the lower tower portion 1 comprising the thickening 3 and its vicinity, as well as the sector of the upper portion 2 comprising the thickening 4 and its vicinity, are each further provided with respective horizontal through holes for receiving a rod 9 securing the lower tower portion 1 to the upper tower portion 2 in a considerably horizontal direction, immobilizing members which in this embodiment are respective threaded nuts and anchoring plates further being applied on both sides of said rod 9.

In this second embodiment, a sheath 10 is interposed between each of the horizontal through holes and each of the rods 9.

Furthermore, the walls of the considerably vertical contact surface 7 are provided with indentations 12 which, like the rods 9, improve the capability of transmitting longitudinal shear stresses.

Said rod 9 can also be used for provisional fixing tasks during the process of lifting the upper tower portion 1 along the inner face of the lower tower portion 2 by aligning a through hole in which the sheath 11 is housed (made in at least one intermediate point of the upper tower portion 1) with the through hole in which one of the sheaths 10 is housed (provided in the head fraction of the lower tower portion 2) and securing both portions 1 and 2 to one another by means of the rod 9.

Finally, Figure 3 also shows plates 13 which in this embodiment are intended for fixing the upper tower portion to the lower tower portion by means of rods 9 before applying the hardenable filler material.

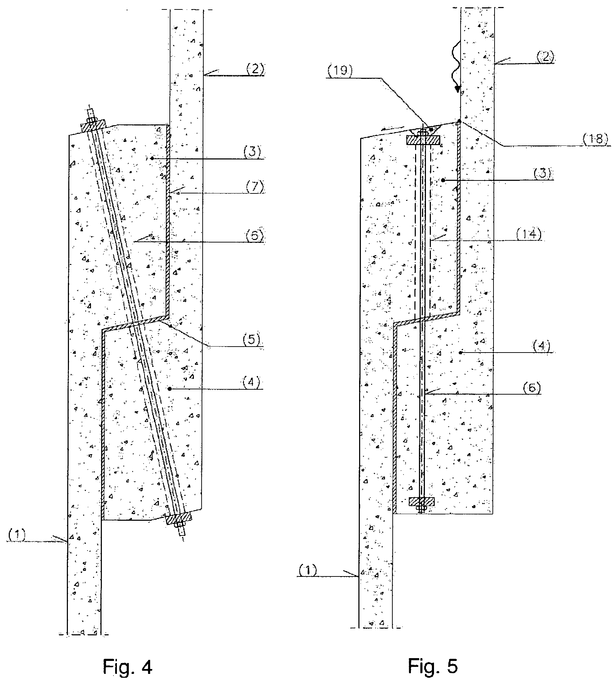

Figure 4 shows a third embodiment of a horizontal joint assembly according to the invention which is substantially identical to that shown in Figure 2, except:
- the through holes provided in the thickening 3 and the thickening 4 run according to an oblique direction; and
- the contact surface 5 is no longer horizontal but rather inclined.

According to this new configuration, once the rod 6 is introduced through said holes, it would be arranged in an inclined manner with respect to the vertical, which would entail a more direct transmission of stresses. The fact that the surface 5 is inclined also facilitates the flow of the hardenable filler material and prevents the creation of air and/or water pockets during the filling process.

Figure 5 shows a fourth embodiment of a horizontal joint assembly according to the invention which is substantially identical to that shown in Figure 2 except that the upper end of the thickening 3 of the head fraction of the lower tower portion 1 is inclined such that its inner face is at a greater height than its outer face. This therefore helps rain water (which falls in the direction indicated by the wavy arrow in said Figure 5) to run along said inclined end according to the direction of the cross slope (indicated with an inclined arrow in said Figure 5), making it difficult for rain to enter the joint. A sealing element is also provided in the attachment area for attaching the head fraction of the lower tower portion with the upper tower portion, increasing the water-tightness of the joint assembly.

Said figure also illustrates how the upper tower portion is provided with a casing 19 for housing the immobilizing members in this embodiment which can be filled with a hardenable material after anchoring to better protect said members.

Likewise, this embodiment also shows how the anchoring means 6 are embedded in the base thickening of the lower tower portion 2 without providing a sheath.

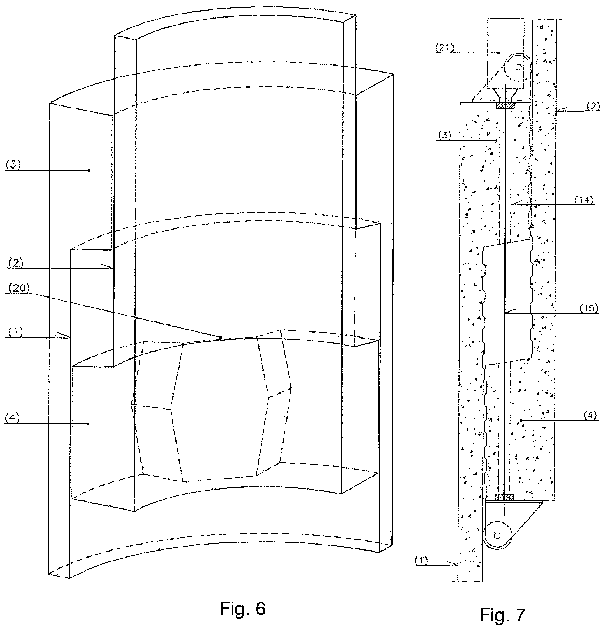

Figure 6 show a fifth embodiment of a horizontal joint assembly according to the invention in which the thickening 4 of the base fraction of the upper tower portion 2 is provided with a sinkage 20 which prevents interferences with inner elements fixed to the inner wall of the lower tower portion 1 when lifting the thickening 4. Said sinkage can optionally be filled with hardenable material once the assembly has been completed.

Figure 7 illustrates a possible way of carrying out lifting step b) for lifting the upper tower portion 2 which consists of fixing haulage means 21 provided with an auxiliary haulage element 15 to the thickening 3 of the lower tower portion 1. Then the auxiliary haulage element 15 is introduced through the sheath 14 and anchored to the thickening 4 of the upper tower portion 2. The haulage means 21 are finally actuated for lifting the upper tower portion 2.

In this embodiment the haulage means 21 are a lifting jack and the auxiliary haulage element 15 is a wire rope, although it is possible to use other similar technical components.

The embodiments of the invention herein described have also been given exclusively by way of illustrative and non-limiting example. Other modifications and different embodiments included within the scope of the invention as defined in the attached claims will be evident for the person skilled in the art.

In fact, it will be obvious for the person skilled in the art, for example, that epoxy mortars and/or resins can also be used as hardenable filler materials and that both rod 6 and horizontal rods 9 can be pretensed or non-pretensed type rods.

It will also be obvious for the person skilled in the art that the horizontal joint assemblies according to the invention can be provided with windows in the wall of one of the tower portions 1, 2 to allow access to the surface 5.

Finally, the horizontal joint assemblies according to the invention can be applied to concrete towers, to steel towers and to combined concrete-steel towers.

## Claims

1. A horizontal joint assembly between two telescopic wind turbine tower portions comprising the head fraction of a lower tower portion (1), the base fraction of an upper tower portion (2), and anchoring means (6) intended for anchoring said head fraction of the lower tower portion (1) to said base fraction of the upper tower portion (2), said upper tower portion (2) also being intended for being lifted along the inner face of said lower tower portion (1); wherein said head fraction of the lower tower portion (1) is provided with a thickening (3) in its inner face and said base fraction of the upper tower portion (2) is provided with a thickening (4) in its outer face, such that both thickenings substantially contact one another when the upper segment is lifted; wherein the relative position of the thickenings (3) and (4) is such that they define a considerably horizontal contact surface (5) and a considerably vertical contact surface (7); **characterized in that** the walls of the considerably vertical contact surface (7) are provided with indentations (12) and a layer (8) of hardenable filler material is arranged along the contact surfaces (5) and (7).

2. The horizontal joint assembly between two telescopic wind turbine tower portions according to claim 1, **characterized in that** the length (A) of the considerably vertical contact surface (7) is significantly greater than the length (B) of the horizontal contact surface (5).

3. The horizontal joint assembly between two telescopic wind turbine tower portions according to any of the preceding claims, **characterized in that** the thickenings (3) and (4) are provided with respective vertical through holes for housing anchoring means (6) therein.

4. The horizontal joint assembly between two telescopic wind turbine tower portions according to claim 3, **characterized in that** the anchoring means (6) are a rod securing the lower tower portion (1) to the upper tower portion (2) according to the vertical direction, respective immobilizing members being applied on both ends of said rod (6).

5. The horizontal joint assembly between two telescopic wind turbine tower portions according to any of claims 3 and 4, **characterized in that** a sheath (14) is interposed between the vertical through hole of the thickenings (3, 4) and the anchoring means (6).

6. The horizontal joint assembly between two telescopic wind turbine tower portions according to any of the preceding claims, **characterized in that** the hardenable filler material is grout, epoxy mortar and/or resin.

7. The horizontal joint assembly between two telescopic wind turbine tower portions according to any of the preceding claims, **characterized in that** the sector of the lower tower portion (1) comprising the thickening (3) and its vicinity, and the sector of the upper portion (2) comprising the thickening (4) and its vicinity, are each provided with respective horizontal through holes for receiving a rod (9) securing the lower tower portion (1) to the upper tower portion (2) according to the horizontal direction, immobilizing members being applied on both sides of said rod (9).

8. The horizontal joint assembly between two telescopic wind turbine tower portions according to claim 7, **characterized in that** a sheath (10) is interposed between each of the horizontal through holes and each of the rods (9).

9. The horizontal joint assembly between two telescopic wind turbine tower portions according to any of the preceding claims, **characterized in that** the upper tower portion (2) is provided along its length with at least one through hole in which a sheath (11) is housed.

10. The horizontal joint assembly between two telescopic wind turbine tower portions according to any of the preceding claims, **characterized in that** the through holes provided in the thickening (3) of the lower tower portion (1) and the thickening (4) of the upper tower portion (2) run according to an oblique direction.

11. The horizontal joint assembly between two telescopic wind turbine tower portions according to any of the preceding claims, **characterized in that** the contact surface (5) is inclined.

12. The horizontal joint assembly between two telescopic wind turbine tower portions according to any of the preceding claims, **characterized in that** the upper end of the thickening (3) of the lower tower portion (1) is inclined.

13. The horizontal joint assembly between two telescopic wind turbine tower portions according to any of the preceding claims, **characterized in that** a sealing element is provided in the attachment area for attaching the head fraction of the lower tower portion (1) with the upper tower portion (2).

14. The horizontal joint assembly between two telescopic wind turbine tower portions according to any of the preceding claims, **characterized in that** the thickening (4) of the upper tower portion (2) is provided with a sinkage (20).

15. The horizontal joint assembly between two telescopic wind turbine tower portions according to any of the preceding claims, **characterized in that** at least one of the tower portions (1, 2) is provided with a window for accessing the contact area between portions.

16. A method of installing a horizontal joint assembly between two telescopic wind turbine tower portions according to any of the preceding claims, comprising the steps of:
a) arranging an upper tower portion (2) in the vicinity of the inner face of a lower tower portion, such that the outer face of the upper tower portion is facing the inner face of the lower tower portion;
b) lifting said upper tower portion above said lower tower portion until the thickening provided in the outer face of the base fraction of the upper tower portion substantially contacts the thickening provided in the inner face of the head fraction of the lower tower portion;
c) anchoring said head fraction of the lower tower portion to said base fraction of the upper tower portion by means of the anchoring means; and
d) pouring a hardenable filler material on the contact surface between the base fraction of the upper tower portion and the head fraction of the lower tower portion.

17. The method of installing a horizontal joint assembly between two telescopic wind turbine tower portions according to claim 16, **characterized in that** lifting step b) is performed by means of a lifting jack (21) provided with a wire rope (15).

## Patentansprüche

1. Eine horizontale Verbindungsbaugruppe zwischen zwei Teleskop-Windturbinenturmabschnitten besteht aus dem Kopfteil eines unteren Turmabschnitts (1), dem Basisteil eines oberen Turmabschnitts (2) und Verankerungen (6), diese sind dafür vorgesehen die Verankerung des Kopfteils des unteren Turmteils (1) mit dem besagten Basisteil des oberen Turmteils (2) zu sichern sowie dafür vorgesehen entlang der Innenfläche des besagten unteren Turmabschnitts (1) angehoben zu werden; wobei das besagte Kopfteil des unteren Turmabschnitts (1) mit einer Verdickung (3) in seiner Innenfläche und besagtes Basisteil des oberen Turmabschnitts (2) mit einer Verdickung (4) in seiner Außenfläche versehen ist, so dass sich beide Verdickungen großflächig kontaktieren, wenn das obere Segment angehoben wird; wobei die relative Lage der Verdickungen (3) und (4) eine beträchtlich horizontal angeordnete Kontaktfläche (5) und eine beträchtlich vertikal angeordneten Kontaktfläche (7) festlegen; **dadurch gekennzeichnet, dass** die Wände der beträchtlich vertikal angeordneten Kontaktfläche (7) mit Vertiefungen (12) ausgestattet ist und eine Schicht (8) härtbaren Füllmaterials entlang der Kontaktflächen (5) und (7) eingebracht wurde.

2. Die horizontale Verbindungsbaugruppe zwischen zwei Teleskop-Windturbinenturmabschnitten, entsprechend Anforderung 1, ist **dadurch gekennzeichnet, dass** die Länge (A) der deutlich vertikalen Kontaktoberfläche (7) ist signifikant größer als die Länge (B) der horizontalen Kontaktoberfläche (5).

3. Die horizontale Verbindungsbaugruppe zwischen zwei Teleskop-Windturbinenturmabschnitten, entsprechend jeder zuvor aufgestellten Anforderungen, ist **dadurch gekennzeichnet, dass** die Verdickungen (3) und (4) mit entsprechenden vertikalen Durchgangsbohrungen ausgestattet sind, um darin Verankerungen aufzunehmen (6).

4. Die horizontale Verbindungsbaugruppe zwischen zwei Teleskop-Windturbinenturmabschnitten, entsprechend Anforderung 3, ist **dadurch gekennzeichnet, dass** die Verankerungen (6) aus einem Stab bestehen, die den unteren Turbinenabschnitt (1), entsprechend der vertikalen Richtung bzw. der immobilisierenden Elemente, die an beiden Enden des Stabes angebracht sind (6), an den oberen Turbinenabschnitt sichern (2).

5. Die horizontale Verbindungsbaugruppe zwischen zwei Teleskop-Windturbinenturmabschnitten, entsprechend jeglicher Anforderung 3 und 4, ist **dadurch gekennzeichnet, dass** ein Hüllrohr (14) zwischen dem vertikalen Durchgangsloch der Verdickungen (3, 4) und der Verankerungen (6) eingefügt wurde.

6. Die horizontale Verbindungsbaugruppe zwischen zwei Teleskop-Windturbinenturmabschnitten, entsprechend jeglicher zuvor aufgestellter Anforderungen, ist **dadurch gekennzeichnet, dass** das härtbare Füllmaterial Einspritzmörtel, Epoxy-Mörtel und / oder Kunstharz ist.

7. Die horizontale Verbindungsbaugruppe zwischen zwei Teleskop-Windturbinenturmabschnitten, entsprechend jeglicher zuvor aufgestellter Anforderungen, ist **dadurch gekennzeichnet, dass** der Sektor des unteren Turmabschnitts (1), der die Verdickung (3) und seine Anschlusszone enthält und der Sektor des oberen Teils (2) mit die Verdickung (4) und seine Anschlusszone enthält, mit entsprechenden horizontalen Durchgangslöchern ausgestattet sind, um einen Stab (9) aufzunehmen, der den unteren Turmabschnitts (1) mit dem oberen Turmabschnitt (2) entsprechend der horizontalen Richtung bzw. der immobilisierenden Elemente, die an beiden Enden des Stabes angebracht sind (9) ist, zu sichern.

8. Die horizontale Verbindungsbaugruppe zwischen zwei Teleskop-Windturbinenturmabschnitten, entsprechend Anforderung 7, ist **dadurch gekennzeichnet, dass** ein Hüllrohr (10) zwischen jedem vertikalen Durchgangsloch der Verdickungen und jeder Verankerungen (9) eingefügt wurde.

9. Die horizontale Verbindungsbaugruppe zwischen zwei Teleskop-Windturbinenturmabschnitten, entsprechend jeder zuvor aufgestellten Anforderung, ist **dadurch gekennzeichnet, dass** der obere Turmabschnitt (2) auf seine Länge mit mindestens einem Durchgangsloch versehen ist, in dem ein Hüllrohr (11) eingefügt wurde.

10. Die horizontale Verbindungsbaugruppe zwischen zwei Teleskop-Windturbinenturmabschnitten, entsprechend jeder zuvor aufgestellten Anforderung, ist **dadurch gekennzeichnet, dass** die in der Verdickung vorgesehenen Durchgangslöcher (3) des unteren Turmabschnitts (1) und die Verdickung (4) des oberen Turmabschnitts (2) schräg verlaufen.

11. Die horizontale Verbindungsbaugruppe zwischen zwei Teleskop-Windturbinenturmabschnitten, entsprechend jeder zuvor aufgestellten Anforderung, ist **dadurch gekennzeichnet, dass** die Kontaktfläche (5) geneigt ist.

12. Die horizontale Verbindungsbaugruppe zwischen zwei Teleskop-Windturbinenturmabschnitten, entsprechend jeder zuvor aufgestellten Anforderung, ist **dadurch gekennzeichnet, dass** das obere Ende der Verdickung (3) des unteren Turmabschnitts (1) geneigt ist.

13. Die horizontale Verbindungsbaugruppe zwischen zwei Teleskop-Windturbinenturmabschnitten, entsprechend jeder zuvor aufgestellten Anforderung, ist **dadurch gekennzeichnet, dass** ein Dichtungselement im Anbauteil angebracht ist, um den Kopfteil des unteren Turmabschnitts (1) mit der oberen Turmabschnitt in dem Befestigungsbereich (2) zu verbinden.

14. Die horizontale Verbindungsbaugruppe zwischen zwei Teleskop-Windturbinenturmabschnitten, entsprechend jeder zuvor aufgestellten Anforderung, ist **dadurch gekennzeichnet, dass** die Verdickung (4) des oberen Turmabschnitts (2) mit einem Abfluss versehen ist (20).

15. Die horizontale Verbindungsbaugruppe zwischen zwei Teleskop-Windturbinenturmabschnitten, entsprechend jeder zuvor aufgestellten Anforderung, ist **dadurch gekennzeichnet, dass** mindestens einer der Turmabschnitte (1, 2) mit einem Fenster versehen ist, um Zugang zur Kontaktfläche zwischen den Abschnitten zu erhalten.

16. Eine Methode, um eine horizontale Verbindungsbaugruppe zwischen zwei Teleskop-Windturbinenturmabschnitten, entsprechend jeder zuvor aufgestellten Anforderungen, zu montieren, umfasst die Schritte:
a) Anordnen eines oberen Turmabschnitts (2) in der Nähe der Innenfläche eines unteren Turmabschnitts, in der Form, dass die Außenfläche des oberen Turmabschnitts der Innenfläche des unteren Turmabschnitts zugewandt ist;
b) Anheben des besagten oberen Turmabschnitts über den besagten unteren Turmabschnitts bis die Verdickung der Außenfläche des Basisteils des oberen Turmabschnitts substantiell die Verdickung der Innenfläche des Kopfteils des unteren Turmabschnitts kontaktiert;
c) Verankern des besagten Kopfteils des unteren Turmabschnitts an dem besagten Basisteil des oberen Turmabschnitts mittels Verankerungen; und
d) Eingießen eines härtbaren Füllmaterials auf die Kontaktfläche zwischen dem Basisanteil des oberen Turmabschnitts und des Kopfteils des unteren Turmabschnitts.

17. Die Methode, um eine horizontale Verbindungsbaugruppe zwischen zwei Teleskop-Windturbinenturmabschnitten, entsprechend Anforderung 16, ist **dadurch gekennzeichnet, dass** Aufbauschritt b) mit Hilfe eines Hydraulikhebers Hebezylinders (21) ausgeführt wird, der mit einem Drahtseil (15) ausgestattet ist.

## Revendications

1. Ensemble de joints horizontaux entre deux parties de tour de turbine éolienne télescopiques comprenant la fraction de tête d'une partie de tour inférieure (1), la fraction de base d'une partie de tour supérieure (2) et un moyen d'ancrage (6) destiné à ancrer ladite fraction de tête de la partie de tour inférieure (1) à ladite fraction de base de la partie de tour supérieure (2), ladite partie de tour supérieure (2) étant également destinée à être levée le long de la face interne de ladite partie de tour inférieure (1) ; dans lequel ladite fraction de tête de la partie de tour inférieure (1) est dotée d'un épaississement (3) dans sa face interne et ladite fraction de base de la partie de tour supérieure (2) est dotée d'un épaississement (4) dans sa face externe, de sorte que les deux épaississements soient sensiblement en contact l'un avec l'autre lorsque le segment supérieur est levé ; dans lequel la position relative des épaississements (3) et (4) est tel qu'ils définissent une surface de contact (5) considérablement horizontale et une surface de contact (7) considérablement verticale ; **caractérisé en ce que** les parois de la surface de contact (7) considérablement verticale sont dotées d'indentations (12) et une couche (8) de matériau de remplissage durcissable est agencée le long des surfaces de contact (5) et (7).

2. Ensemble de joints horizontaux entre deux parties de tour de turbine éolienne télescopiques selon la revendication 1, **caractérisé en ce que** la longueur (A) de la surface de contact (7) considérablement verticale est sensiblement plus grande que la longueur (B) de la surface de contact (5) horizontale.

3. Ensemble de joints horizontaux entre deux parties de tour de turbine éolienne télescopiques selon l'une quelconque des revendications précédentes, **caractérisé en ce que** les épaississements (3) et (4) sont dotés de trous traversants verticaux respectifs pour loger le moyen d'ancrage (6) en leur sein.

4. Ensemble de joints horizontaux entre deux parties de tour de turbine éolienne télescopiques selon la revendication 3, **caractérisé en ce que** le moyen d'ancrage (6) se compose d'une tige fixant la partie de tour inférieure (1) à la partie de tour supérieure (2) dans le sens vertical, des éléments d'immobilisation respectifs étant appliqués sur les deux extrémités de ladite tige (6).

5. Ensemble de joints horizontaux entre deux parties de tour de turbine éolienne télescopiques selon l'une quelconque des revendications 3 et 4, **caractérisé en ce qu'**une gaine (14) est intercalée entre le trou traversant vertical des épaississements (3, 4) et le moyen d'ancrage (6).

6. Ensemble de joints horizontaux entre deux parties de tour de turbine éolienne télescopiques selon l'une quelconque des revendications précédentes, **caractérisé en ce que** le matériau de remplissage durcissable est un coulis, un mortier à base de résine époxy et/ou une résine.

7. Ensemble de joints horizontaux entre deux parties de tour de turbine éolienne télescopiques selon l'une quelconque des revendications précédentes, **caractérisé en ce que** le secteur de la partie de tour inférieure (1) comprenant l'épaississement (3) et son entourage et le secteur de la partie supérieure (2) comprenant l'épaississement (4) et son entourage sont chacun dotés de trous traversants horizontaux respectifs destinés à recevoir une tige (9) fixant la partie de tour inférieure (1) à la partie de tour supérieure (2) dans le sens horizontal, des éléments d'immobilisation étant appliqués sur les deux côtés de ladite tige (9).

8. Ensemble de joints horizontaux entre deux parties de tour de turbine éolienne télescopiques selon la revendication 7, **caractérisé en ce qu'**une gaine (10) est intercalée entre chacun des trous traversants horizontaux et chacune des tiges (9).

9. Ensemble de joints horizontaux entre deux parties de tour de turbine éolienne télescopiques selon l'une quelconque des revendications précédentes, **caractérisé en ce que** la partie de tour supérieure (2) est dotée le long de sa longueur d'au moins un trou traversant dans lequel une gaine (11) est logée.

10. Ensemble de joints horizontaux entre deux parties de tour de turbine éolienne télescopiques selon l'une quelconque des revendications précédentes, **caractérisé en ce que** les trous traversants présents dans l'épaississement (3) de la partie de tour inférieure (1) et l'épaississement (4) de la partie de tour supérieure (2) s'étendent dans le sens oblique.

11. Ensemble de joints horizontaux entre deux parties de tour de turbine éolienne télescopiques selon l'une quelconque des revendications précédentes, **caractérisé en ce que** la surface de contact (5) est inclinée.

12. Ensemble de joints horizontaux entre deux parties de tour de turbine éolienne télescopiques selon l'une quelconque des revendications précédentes, **caractérisé en ce que** l'extrémité supérieure de l'épaississement (3) de la partie de tour inférieure (1) est inclinée.

13. Ensemble de joints horizontaux entre deux parties de tour de turbine éolienne télescopiques selon l'une quelconque des revendications précédentes, **caractérisé en ce qu'**un élément d'étanchéité est prévu dans la zone de fixation afin de fixer la fraction de tête de la partie de tour inférieure (1) à la partie de tour supérieure (2).

14. Ensemble de joints horizontaux entre deux parties de tour de turbine éolienne télescopiques selon l'une quelconque des revendications précédentes, **caractérisé en ce que** l'épaississement (4) de la partie de tour supérieure (2) est doté d'un enfoncement (20).

15. Ensemble de joints horizontaux entre deux parties de tour de turbine éolienne télescopiques selon l'une quelconque des revendications précédentes, **caractérisé en ce qu'**au moins une des parties de tour (1, 2) est dotée d'une fenêtre afin d'accéder à la zone de contact entre les parties.

16. Procédé d'installation d'un ensemble de joints horizontaux entre deux parties de tour de turbine éolienne télescopiques selon l'une quelconque des revendications précédentes, comprenant les étapes consistant à :
a) agencer une partie de tour supérieure (2) à proximité de la face interne d'une partie de tour inférieure, de sorte que la face externe de la partie de tour supérieure fasse face à la face interne de la partie de tour inférieure ;
b) lever ladite partie de tour supérieure au-dessus de ladite partie de tour inférieure, jusqu'à ce que l'épaississement prévu dans la face externe de la fraction de base de la partie de tour supérieure soit sensiblement en contact avec l'épaississement prévu dans la face interne de la fraction de tête de la partie de tour inférieure ;
c) ancrer ladite fraction de tête de la partie de tour inférieure à ladite fraction de base de la partie de tour supérieure au moyen du moyen d'ancrage ; et
d) verser un matériau de remplissage durcissable sur la surface de contact entre la fraction de base de la partie de tour supérieure et la fraction de tête de la partie de tour inférieure.

17. Procédé d'installation d'un ensemble de joints horizontaux entre deux parties de tour d'éolienne télescopiques selon la revendication 16, **caractérisé en ce que** l'étape de levage b) est effectuée au moyen d'un vérin de levage (21) doté d'un câble métallique (15).
